# EUROPÄISCHE PATENTSCHRIFT

(11) **EP 2 769 942 B1**
(45) Veröffentlichungstag und Bekanntmachung des Hinweises auf die Patenterteilung: **14.09.2016**
(21) Anmeldenummer: 13156514.5
(22) Anmeldetag: 25.02.2013
(51) Int. Cl.: B65G 47/86, B67C 3/24

(54) **Greifarm für eine Greifeinrichtung und Vorrichtung zum Transportieren von Behältern mit dergleichen Greifarmen**
Gripper arm for a gripping device and machine for transporting containers by means of such gripping arms
Bras de préhension pour un dispositif de préhension ainsi que la machine pour transporter des récipients au moyen de ces bras de préhension

(43) Veröffentlichungstag der Anmeldung: 27.08.2014
(73) Patentinhaber: Tyrolon-Schulnig GmbH, 6395 Hochfilzen (AT)
(72) Erfinder: Schulnig, Elmar, Ludwig, 6391 Fieberbrunn (AT)
(74) Vertreter: Rupprecht, Kay

(56) Entgegenhaltungen:
- EP-A1- 1 595 827
- EP-A1- 2 159 172
- EP-A1- 2 548 824
- EP-B1- 1 868 746
- WO-A1-2012/123566
- DE-A1-102009 005 151
- DE-A1-102009 018 731
- DE-B3-102008 019 766
- DE-U1- 20 305 988

## Beschreibung

Die vorliegende Erfindung betrifft einen Greifarm für eine Greifeinrichtung zum Greifen, Halten und/oder Führen von insbesondere kleinen und rund geformten Behältern, sowie eine Greifeinrichtung, eine Transportvorrichtung und ein Transportsystem.

Greifeinrichtungen zum Greifen, Halten und/oder Führen von insbesondere kleinen und größeren (aber nicht ausschließlich runden, sondern auch ovalen, regelmäßig vieleckigen, usw.) geformten Behältern sind bereits aus dem Stand der Technik bekannt und werden bei der fließbandtechnischen Bearbeitung von Behältern verwendet.

Unter dem Begriff "Behälter" sind nachstehend insbesondere aber nicht ausschließlich kleine und rund geformte, insbesondere einen kreisförmigen Querschnitt aufweisende, Behälter zu verstehen, z.B. Fläschchen oder Dosen aus Glas, Metall oder Kunststoff.

Insbesondere beim Reinigen, Befüllen oder Verschließen werden die Behälter bei einer Eingangsstation mittels einer Greifeinrichtung mit mindestens einem Greifarmpaar ergriffen und zur nächsten Station im Prozess transportiert. Eine solche Greifeinrichtung für ein Behältertransportsystem besitzt zwei Greifarme und kann zwischen einer Greifstellung und einer Öffnungsstellung wechseln. Um einen Behälter zu transportieren, greifen die Greifarme normalerweise unterhalb des Halskragens oder insbesondere bei Fläschchen um den Bauch des Behälters. Ein Öffnungsmittel ist üblicherweise vorgesehen, um die Greifeinrichtung zu öffnen und zu schließen.

Die Greifarme einer Greifeinrichtung greifen eine Flasche zum Transportieren normalerweise unterhalb des Fläschenhalskragens oder um den Flaschenbauch. Während der Griff am Flaschenhalskragen ein stabiles Führen eines Behälters erlaubt, ist auf Grund des erhöhten Schwerpunkts und eines fehlenden Kragens der Griff am Flaschenbauch und somit das Führen instabiler. Dies ist insbesondere bei länglichen und/oder gefüllten Behältern der Fall. Zwar ist dem Fachmann bewusst, dass das Halten eines Behälters mittels mehrerer Greifarmpaare stabilisiert werden kann. Jedoch wird auf Grund der mehrteillgen Komponenten die Kömplexität und somit der Herstellungs-, Wartungs- und Reinigungsaufwand einer Greifeinrichtung erhöht. Der sich auf den Greifarmpaaren sammelnde Schmutz ist insbesondere bei hygienesensitiven Vorgängen wie dem Abfüllen von Milch oder Babynahrung nachteilig. Dabei sammelt sich der Schmutz insbesondere in Vertiefungen in und/oder zwischen den Komponenten.

Daher bringt der Betrieb einer aus dem Stand der Technik bekannten Greifeinrichtung entweder Stabilitatsprobleme beim Halten und Führen von Behältern oder einen erhöhten Herstellungs-, Wartungs- und Reinigungsaufwand mit sich, was sich insbesondere beim Einsatz in Bereichen wie dem industriellen Abfüllen von Flaschen für Getränke oder Säfte als nachteilig erweist. Es ist daher wünschenswert, insbesondere die vorstehend genannten Probleme zu lösen.

WO 2012 / 123566 A1 betrifft ein Transportgerät mit Greifern zum Greifen und Transportieren von Behältern. Die Greifer weisen jeweils Greifarme mit- Klemmbacken auf, um Behälter, insbesondere Flaschen, am Flaschenhals zu halten. Die Greifer werden mittels einer Feder geschlossen und einem unterhalb der Greifer angeordneten Mechanismus geöffnet.

EP 1 595 827 A1 beschreibt Transportgerät mit Greifern zum Greifen von Behältern, wobei eine Feder als Schließmittel zwischen den Greifarmen des Greifers angeordnet. ist. Zum Öffnen des Greifers wird eine Achse über einen unterhalb der Greifarme angeordneten Nocken angesteuert.

Es ist daher die Aufgabe der vorliegenden Erfindung, einen Greifarm für eine Greifeinrichtung, sowie eine Greifeinrichtung, eine Transportvorrichtung und ein Transportsystem der eingangs genannten Art in vorteilhafter Weise weiterzubilden, insbesondere dahingehend, bei einem Greifarm und einer Greifeinrichtung die Verschmutzungsneigung stark. vermindert wird und weiter insbesondere mittels des Greifarmes und der Greifeinrichtung längliche Behälter stabil gehalten und geführt werden können.

Diese Aufgabe wird erfiridungsgemäß gelöst durch einen Greifarm mit den Merkmalen des Anspruchs 1. Danach ist vorgesehen, dass Greifarm für eine Greifeinrichtung zum Greifen, Halten und Führten von insbesondere kleinen und rund geformten Behältern wenigstens einen drehbar gelagerten Steuernocken aufweist, wobei der Steuernocken derart beschaffen und ausgebildet ist, dass mittels des Steuernockens bzw. Drehung des Steuernockens der Greifarm von wenigstens einer ersten Stellung, insbesondere einer Greifstellung, in wenigstens eine zweite Stellung, insbesondere eine Öffnungsstellung, und/oder umgekehrt bewegbar ist, wobei der Greifarm wenigstens eine Bohrung zur zumindest teilweisen Aufnahme eines Lagerbolzens aufweist, wobei der Lagerbolzen derart beschaffen ist, dass der Greifarm in der Greifeinrichtung schwenkbar, insbesondere schwenkbar befestigbar ist, und wobei der Greifarm weiter wenigstens eine Aufnahme für ein Schließmittel aufweist, wobei das Schließmittel derart ausgebildet ist, dass mittels des Schließmittels der Greifarm von der zweiten Stellung, insbesondere der Öffnungsstellung, in die erste Stellung, insbesondere die Greifstellung, und/oder umgekehrt bewegbar ist, und wobei der Greifarm wenigstens einen Greifabschnitt aufweist, der zumindest teilweise gabelartig geformt ist und insbesondere mindestens zwei Greiffinger aufweist, die derart beschaffen und ausgebildet sind, dass in der Greifstellung zum Halten eines Behälters geeignet sind und dienen können

Dadurch ergibt sich insbesondere der Vorteil, dass bei einem Greifarm und einer Greifeinrichtung die Verschmutzungsneigung stark vermindert wird und weiter insbesondere mittels des Greifarmes und der Greifeinrichtung längliche Behälter stabil gehalten und geführt werden können.

Die bei herkömmlichen Greifeinrichtungen regelmäßig zum Einsatz kommenden, mehreren Greifarmpaare entfallen somit, wodurch eine wesentlich hygienischere Greifeinrichtung ohne Verschmutzung anziehende Greifarmpaare erzielbar ist. Im Ergebnis werden die Ansatzflächen für Keime und Verschmutzungen, insbesondere Oberflächenvertiefungen zwischen Komponenten, erheblich reduziert.

Damit einher ergeht eine erhebliche Reduzierung der Wartungs- und Reparaturanfälligkeit, da für die gleiche Anzahl an Berührungspunkten zum Greifen des Behälters nicht mehr eine Vielzahl an Greifarmpaaren, sondern lediglich nur noch ein Greifarmpaar benötigt wird.

Zusätzlich wird auf Grund der Gabelform des Greifabschnitts und insbesondere der mindestens zwei Greiffinger bei jedem Greifarm die Haltekraft der Greifeinrichtung auf den Behälter auf eine größere Fläche des Behälters verteilt und der Behälter dadurch beim Führen stabilisiert.

Mit dem Ziel die Abnutzung der zum Steuernocken gerichteten und mit ihr zusammenwirkenden Greifarminnenseite zu reduzieren, weist der Greifarm zwischen der wenigstens einen Bohrung und dem wenigstens einen Greifabschnitt wenigstens zwei an einer Greifarminnenseite angeordneten Aufnahmebolzen zum rotierbaren Befestigen jeweils wenigstens eines Lagerreifens auf, der mit dem Steuernocken zum Überführen von der Greifstellung in die Öffnungsstellung zusammenwirkt. Die Greifarminnenseite ist die Seite des Greifarms, die in der Greifstellung auf den gegriffenen Behälter gerichtet ist. Die der Greifarminnenseite gegenüberliegende Seite des Greifarms wird Greifarmaußenseite genannt. Wenn der wenigstens eine Steuernocken nun die Greifarmeinrichtung öffnet, wird beim Zusammenwirken nicht die Greifarminnenseite, sondern wenigstens einer der Lagerreifen beansprucht. Der wenigstens eine rotierbar befestigte Lagerreifen, der insbesondere Kunststoff oder Gummi aufweist, erfährt an unterschiedlichen Seiten und zusätzlich, im Vergleich zu einer ungeschützten Greifarminnenseite weniger Materialabrieb durch den wenigstens einen Steuernocken. Dies stellt ebenfalls sicher, dass die Öffnungsstellung der Greifeinrichtung gleichbleibt. Auf Grund der vorderseitigen Anordnung der Lagerreifen in der Greifeinrichtung sind die Lagerreifen, ähnlich der zuvorgenannten Feder, leicht zu säubern. Die wenigstens zwei Aufnahmebolzen sind getrennt voneinander, liegen jedoch auf einer gemeinsamen Achse und sind parallel zur Bohrung des Greifarms angeordnet. Die Lagerreifen können gleichzeitig auf Ober- und Unterseite des Greifarms oder an der Greifarminnenseite angeordnet sein. Des Weiteren existiert eine Ausführungsform, in der nur ein Aufnahmebolzen ausgebildet ist und auf dem wenigstens ein Lagerreifen angeordnet ist.

Damit die Bewegung der Greifabschnitte der jeweiligen Greifarme von der Öffnungsstellung in die Greifstellung als auch umgekehrt von den Greifarmen jeweils gleichmäßig ausgeführt wird, weist der Greifarm vorteilhafterweise wenigstens einen Verzahnungsabschnitt mit zumindest segmentweise konzentrisch um die wenigstens eine Bohrung an der Greifarminnenseite angeordneten Zähnen zum Zusammenwirken, insbesondere zum synchronen Schwenken, des Greifarms mit einem korrespondierend angeordneten Greifarm in der Einrichtung auf. Dabei greifen die Zähne der beiden Verzahnungsabschnitte des Greifarmpaares ineinander. Je kürzer die Zähne sind, desto näher liegen sich die Greifarme eines Greifarmpaars gegenüber, damit die Zähne ineinandergreifen können. Außerdem kann die notwendige Kraft zum Schwenken des Greifarmpaars kontinuierlich gleich groß.

In einer weiteren Ausführungsform weist der Greifarm zwischen der wenigstens einen Bohrung und dem wenigstens einen Greifabschnitt für das Schließmittel wenigstens ein erstes Loch als Aufnahme auf, in welches das Schließmittel beim Zusammenbau des Greifarms einsetzbar ist. Auf Grund der an der Vorderseite der Greifeinrichtung befindlichen Aufnahme ist das Schließmittel relativ einfach durch einen vorderseitigen Eingriff in die Greifeinrichtung von außen zu erreichbar, herausnehmbar und austauschbar. Somit muss der Greifarm nicht von dem Lagerbolzen abgezogen werden. Die einfache Wartung oder Reinigung der Feder von Schmutz und Staub ist durch die vorderseitige Anordnung ebenfalls möglich. Auβerdem ist die als erstes Loch geformte Aufnahme ohne große Schwierigkeiten in einem Greifarm realisierbar und bedarf, in wenigstens einem der Ausführungsbeispiele, keiner zusätzlichen, wartungsanfälligen Befestigungselemente für das Schließmittel.

Um ein stabiles, günstiges und zuverlässiges Schließmittel für die Greifeinrichtung bereitzustellen, weist sie vorteilhafterweise wenigstens eine Zugfeder auf, die unter anderem als Spiralfeder aus Metall ausgebildet sein kann.

Vorzugsweise ist die wenigstens eine Aufnahme als Federaufnahme ausgebildet und weist wenigstens eine senkrecht zum ersten Loch angeordnetes zweites Loch auf, in die ein Riegelelement zum Verriegeln der wenigstens einen Zugfeder in dem Loch einsetzbar ist. Das Riegelelement bildet ein kompaktes, stabiles und einfaches Befestigungselement, insbesondere in Form eines Stifts oder ähnlichem, das von der Oberseite des Greifarms in das wenigstens eine, senkrecht zur Oberseite angeordnete zweite Loch der Aufnahme geführt wird und das als Zugfeder ausgebildete Schließmittel an einer Herausnahme aus der Aufnahme hindert. Zur Befestigung der Feder in der Aufnahme mittels eines stiftförmigen Riegelelements ist ein Ende der Feder derart ausgebildet, dass die Bewegungsfreiheit des Federendes mittels des Riegelelements auf die Aufnahme beschränkt ist. Insbesondere ist das Ende der Feder ösenförmig ausgebildet oder weist einen aus Metall, Kunststoff oder Gummi bestehenden Ring auf, wobei das Ende der Feder in der Aufnahme, insbesondere im ersten Loch, zu positionieren und das Riegelelement durch das Ende der Feder in die Aufnahme einzusetzen ist. Das Ende der Feder ist nicht starr in der Aufnahme befestigt oder arretiert, sondern kann Spiel haben und zumindest teilweise schwenkbar sein, um die Greifarmbewegung von der Öffnungsstellung in die Greifstellung und umgekehrt auszugleichen.

Des Weiteren kann der Greifarm vorteilhafter Weise einteilig bzw. einstückig aus Kunststoff, insbesondere aus faserverstärktes Polyetheretherketon, gefertigt sein. Herkömmliche Greifarme bestehen aus Edelstahl und sind deshalb relativ teuer, wobei sich darüber hinaus im Betrieb der in Rede stehenden Vorrichtungen gezeigt hat, dass sich die metallischen Greifarme gelegentlich verbiegen, was zum einen beim Betrieb der Vorrichtung schwer erkennbar ist und zum anderen zu Beschädigungen der zu greifenden und transportierenden Behälter und/oder der gegenüberliegenden Greifarme, welche den Behälter übergeben bzw. übernehmen, und/oder anderer Armaturen führen kann. Werden die Greifarme hingegen aus Kunststoff gefertigt, lassen sie sich sehr günstig als Wegwerfartikel im Spritzgussverfahren herstellen. Des Weiteren weist Kunststoff für diesen Einsatz bessere Eigenschaften gegenüber Edelstahl auf, so dass eine Überbeanspruchung des Greifarms nicht zum Verbiegen, sondern zum sofortigen Bruch führt, was keine Folgebeschädigung der Flasche nach sich zieht und ein sofortiges Erkennen des überbeanspruchten Greifarms ermöglicht. Dann kann der Greifarm aufgrund seiner einstückigen Ausbildung sehr rasch und kostengünstig ersetzt werden. Als vorteilhafter Kunststoff hat sich faserverstärktes Polyetheretherketon (PEEK) erwiesen, da es eine gute Steifigkeit bei gleichzeitiger ausreichender Biegsamkeit aufweist. PEEK ist ein hochtemperaturbeständiger thermoplastischer Kunststoff und die Faserverstärkung ermöglicht einen Faser-Kunststoff-Verbund aus hoher spezifischer Steifigkeit und Festigkeit. Kunststoff zeigt im Gegensatz zu herkömmlich verwendetem Metall bzw. Edelstahl kaum Verschleißerscheinungen bei der Reinigung mit Wasser. Um die Greifarme zu reinigen, können wegen des verwendeten Kunststoffs aber auch aggressive Reinigungsmittel und höhere Temperaturen zum Sterilisieren verwendet werden. Durch einen aus Kunststoff geformten Greifarm entsteht ein leicht austauschbares Produkt, dass nach seiner Abnutzung ohne Probleme entfernt und ohne große Kosten oder Lieferzeiten ersetzt werden kann.

Es hat sich des Weiteren als vorteilhaft herausgestellt, wenn die mindestens zwei Greiffinger des Greifabschnitts parallel zueinander angeordnet sind. Dadurch ist ein besseres und stabileres Greifen insbesondere aber nicht ausschließlich um den Bauch eines Behälters möglich. Insbesondere wird die Haltekraft auf verschiedene Punkte auf der Oberfläche eines Behälters verteilt, wodurch auch eine Art Kippstabilität beim Transportieren des Behälters entsteht.

Des Weiteren betrifft die vorliegende Erfindung eine Greifeinrichtung mit den Merkmalen des Anspruchs 7. Danach ist vorgesehen, dass Greifeinrichtung mit wenigstens einem Greifarm nach einem der Ansprüche 1 bis 6 versehen ist, wobei die Greifeinrichtung eine Greifeinrichtung zum Greifen, Halten und/oder Führen von insbesondere kleinen und rund geformten Behältern ist, wobei die Greifeinrichtung wenigstens einen drehbar gelagerten Steuernocken aufweist, wobei der Steuernocken derart beschaffen und ausgebildet ist, dass mittels des Steuernockens bzw. Drehung des Steuernockens der Greifarm von wenigstens einer ersten Stellung, insbesondere einer Greifstellung, in wenigstens eine zweite Stellung, insbesondere eine Öffnungsstellung, und/oder umgekehrt bewegbar ist.

Die Erfindung betrifft ebenfalls eine Greifeinrichtung mit wenigstens einem erfindungsgemäßen Greifarm, worin insbesondere wenigstens zwei komplementäre Greifarme ein Greifarmpaar bilden. Diese Greifeinrichtung hat den Vorteil, eine vollständig zum Greifen eines Behälters fähige Einheit zu sein, die unter anderem in einer Transportvorrichtung befestigt und als ganzes ausgetauscht werden kann. Insbesondere weißt eine Greifeinrichtung wenigstens einen Lagerbolzen, wenigstens einen Steuernocken und wenigstens ein Schließelement, die auf wenigstens einer Trägereinheit angeordnet sind.

Insbesondere kann vorgesehen sein, dass die Greifeinrichtung ein Greifarmpaar umfassend wenigstens zwei Greifarme, insbesondere wenigstens zwei Greifarme nach einem der Ansprüche 1 bis 6, aufweist, wobei insbesondere wenigstens zwei komplementäre Greifarme ein Greifarmpaar bilden, und/oder dass zwischen den wenigstens zwei Aufnahmen des Greifarmpaars der wenigstens eine Steuernocken angeordnet ist.

Außerdem betrifft die vorliegende Erfindung eine Transportvorrichtung mit den Merkmalen des Anspruchs 9. Danach ist vorgesehen, dass eine Transportvorrichtung zum Transportieren von Behältern mit einem oder mehreren Greifarmen nach einem der Ansprüche 1 bis 6 einem oder mehreren Greifeinrichtungen nach Anspruch 7 oder 8 versehen ist.

Um die Transportvorrichtung flexibel anzupassen, ist sie derart ausgebildet, dass wenigstens eine weitere Transportvorrichtung aufsteckbar, insbesondere formschlüssig verbindbar, ist. Dadurch lassen sich mehrere Transportvorrichtungen aufeinander stapeln und können entsprechend der Verwendung und Betreibsauslastung einer Firma hinzugefügt oder abgenommen werden. Somit muss nicht die komplette Anlage ausgetauscht werden, sondern es muss lediglich eine zusätzliche Transportvorrichtung bestellt, geliefert und hinzugefügt werden, um die Anpassung vorzunehmen. Durch die flexible Anpassung können auch längere oder größere Behälter mittels weiterer Greifeinrichtungen, die durch eine weitere aufgesteckte Transportvorrichtung bereitgestellt werden, transportiert werden, oder es kann eine weitere Transportebene für die Behälter bereitgestellt werden.

Vorzugsweise ist wenigstens ein Steuernocken der Transportvorrichtung mittels wenigstens eines Steckverbindungselements zum Wirkverbinden mit wenigstens einem Steuernocken der wenigstens einen weiteren Transportvorrichtung koppelbar, steckbar oder verbindbar ist. Das Steckverbindungselement kann stab- oder stangenförmig oder stiftförmig sein und in eine Steuerachse der Steuernocken formschlüssig eingesetzt oder verschraubt werden. Durch diese gleichzeitige Ansteuerung der Greifeinrichtungen der Transportvorrichtung können die übereinander angeordneten Greifeinrichtungen gleichzeitig in eine Öffnungsstellung oder Greifstellung gebracht werden und somit größere oder längere Behälter gehalten werden.

Damit das Aufstecken bzw. Wirkverbinden zweier Transportvorrichtungen so einfach und unkompliziert wie möglich gehalten werden kann, werden bereits für andere Zwecke verwendete Komponenten derart ausgebildet, um beim Aufstecken bzw. Wirkverbinden mitzuhelfen. Insbesondere weist die Transportvorrichtung wenigstens einen Lagerbolzen und eine zentrale Drehachse zum Drehen der Transportvorrichtung auf, wobei der wenigstens eine Lagerbolzen und/oder die Drehachse zum Wirkverbinden mit der wenigstens einen weiteren Transportvorrichtung ausgebildet ist/sind. Normalerweise dienen der Lagerbolzen, die Greifarme mittels der Bohrung schwenkbar zu befestigten, und die zentrale Drehachse, die Transportvorrichtung zu drehen oder drehbar zu lagern. Um die weitere Transportvorrichtung aufzustecken, weist die weitere Transportvorrichtung Vertiefungen oder Bohrungen auf, die die Drehachse oder die Lagerbolzen des steckbaren Klammersterns aufnehmen. Durch die Verwendung der Lagerbolzen sind keine weiteren Elemente für die Verbindung der beiden Klammersterne mehr notwendig, was die Anfälligkeit und den Aufwand bei der Produktion, Betrieb und Wartung der Transportvorrichtungen reduziert. Vorzugsweise wird die weitere Transportvorrichtung nur auf der Drehachse der erfindungsgemäßen Transportvorrichtungen befestigt. Dabei ist der Abstand der beiden Transportvorrichtungen dergestalt ausgebildet, dass die Greifarme der erfindungsgemäßen Transportvorrichtung von den Lagerbolzen gezogen werden können, ohne dass ein Anheben der weiteren Transportvorrichtung oder ein Entfernen der Lagerbolzen von der erfindungsgemäßen Transportvorrichtung notwendig ist. Die Verbindung der beiden Transportvorrichtungen erfolgt vorzugsweise formschlüssig.

Vorteilhafterweise sind die Transportvorrichtungen koaxial zueinander angeordnet und/oder die übereinander angeordneten Steuernocken weisen eine gemeinsame Nockenwelle auf. Mittels der koaxialen Anordnung ist eine gleichmäßige und gleichzeitige Drehung aller Transportvorrichtungen möglich. Die gemeinsame Nockenwelle erlaubt eine gleichzeitige Ansteuerung aller übereinander angeordneten Steuernocken.

Vorzugshalber weisen die Transportvorrichtungen jeweils wenigstens eine Trägerplatte mit zueinander gleichem und/oder unterschiedlichen Durchmesser/n auf. Abhängig von den Behältergrößen und -formen können die Greifeinrichtungen an bestimmten Positionen arrangiert werden, um die Behälter zu greifen.

Außerdem betrifft die vorliegende Erfindung ein Transportsystem mit den Merkmalen des Anspruchs 13. Danach ist vorgesehen, dass ein Transportsystem mit mehreren Transportvorrichtungen gemäß einer der Ansprüche 9 bis 12 versehen ist, wobei die Transportvorrichtungen koaxial zueinander angeordnet sind und/oder die übereinander angeordneten Steuernocken eine gemeinsame Nockenwelle aufweisen.

Darüber hinaus kann vorgesehen sein, dass die Transportvorrichtungen jeweils wenigstens eine Trägerplatte mit zueinander gleichem und/oder unterschiedlichen Durchmesser/n aufweisen.

Des Weiteren betrifft die Erfindung ein erfindungsgemäßes Verfahren zum Herstellen eines vorgenannten Greifarms, der in einem Stück in einem Spritzgussverfahren aus Kunststoff hergestellt wird und zu dessen Fertigstellung zwei Lagerreifen und ein Ende einer Feder eingesetzt werden.

Weitere Einzelheiten und Vorteile der Erfindung sollen nun anhand eines in der Zeichnung dargestellten Ausführungsbeispiels näher erlautert werden.

Es zeigen:
- Fig. 1: eine perspektivische Ansicht eines ersten erfindungsgemäßen Greifarms;
- Fig. 2: eine perspektivische Ansicht eines zweiten erfindungsgemäßen Greifarms;
- Fig. 3: eine Draufsicht auf eine Greifeinrichtung aus zwei erfindungsgemäßen Greifärmen;
- Fig. 4: einen Querschnitt durch eine erste erfindungsgemäße Transportvorrichtung;
- Fig. 5: eine Draufsicht auf die erste erfindungsgemäße Transportvorrichtung;
- Fig. 6: eine perspektivische Ansicht auf die erste erfindungsgemäße Transportvorrichtung mit sechs Greifeinrichtungen; und
- Fig. 7: eine perspektivische Ansicht eine zweite erfindungsgemäße Transportvorrichtung mit acht Greifeinrichtungen.

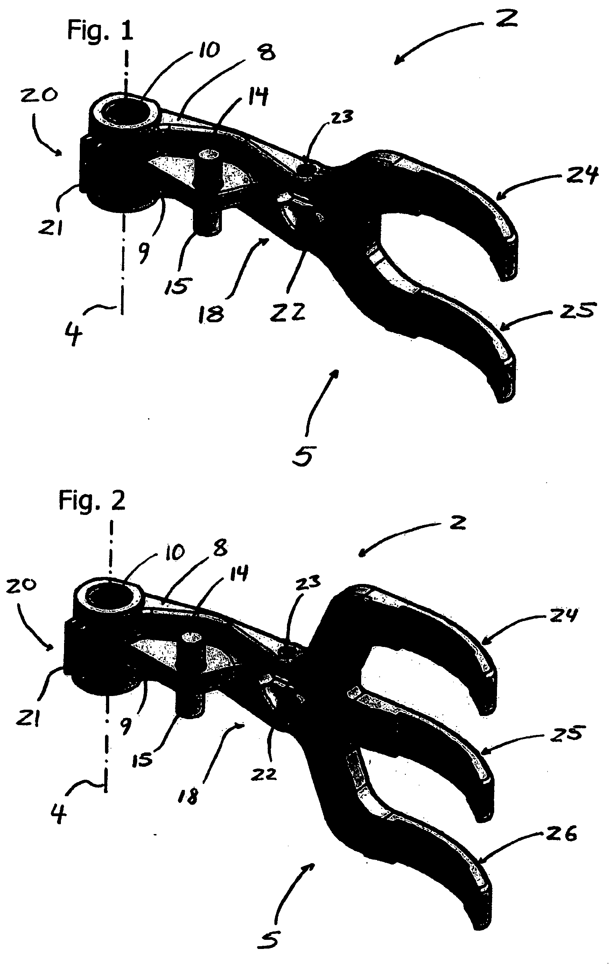

In der perspektivischen Ansicht von Figur 1 wird ein erster erfindungsgemäßer Greifarm 2 dargestellt. Der Greifarm 2 ist für eine Greifeinrichtung zum Greifen, Halten und Führen von insbesondere flaschenartigen Behältern, welche zum Bewegen eines Greifabschnitts 5 des Greifarms 2 von einer Greifstellung in eine Öffnungsstellung einen drehbar gelagerten Steuernocken 11 aufweist, ausgerichrtet. Der Greifarm 2 weist eine Bohrung 10 zur Lagerung eines Lagerbolzens zum schwenkbaren Befestigen des Greifarms 2 in der Einrichtung, und einer Aufnahme 18 für ein - hier nicht dargestelltes - Schließmittel zum Bewegen des Greifabschnitts 5 des Greifarms 2 von der Öffnungsstellung in die Greifstellung, wobei der Greifabschnitt 5 des Greifarms 2 gabelartig geformt ist und mindestens zwei Greiffinger 24 und 25 aufweist, die in der Greifstellung zum Halten des Behälters dienen.

Der Greifarms 2 weist zwischen der Bohrung 10 und dem Greifabschnitt 5 für das Schließmittel ein erstes Loch 22 als Aufnahme 18 auf, in welches das Schließmittel beim Zusammenbau des Greifarms 2 in einer Greifeinrichtung einsetzbar ist. Insbesondere ist das Schließmittel als eine Zugfeder 19 ausgebildet. Die Aufnahme 18 ist als Federaufnahme ausgebildet und weist ein senkrecht zum ersten Loch 22 angeordnetes zweites Loch 23 auf, in die ein - hier nicht dargestelltesRiegelelement zum Verriegeln der Zugfeder 19 in der Aufnahme 18, insbesondere in dem ersten Loch 22, einsetzbar ist. Das Loch 22 ist im Wesentlichen senkrecht zur Bohrung 10 angeordnet und erstreckt sich von Greifarminnenseite zur Greifarmaußehseite. Die Greifarminnenseite ist die Seite, die dem Behälter und dem Steuernocken 11 zugewendet ist. Die Greifarmaußenseite ist die der Greifarminnenseite gegenüberliegende Seite desselben Greifarms. Das zweite Loch 23 ist als eine Senkrechtbohrung von der Oberseite 8 des Greifarms 2 in das erste Loch 22 ausgebildet und erstreckt sich insbesondere in Richtung der Unterseite 9 über das erste Loch 22 hinaus. Dadurch kann ein Riegelelement in Form eines Stifts von der Oberseite 8 in das zweite Loch 23 eingesetzt werden und das Schließmittel, insbesondere die Feder, in dem Loch verriegeln bzw. an einer Herausnahme aus der Aufnahme 18 hindern.

Der Greifarm 2 ist einstückig aus Kunststoff, insbesondere aus faserverstärktem Polyetheretherketon, gefertigt. Die mindestens ein Greiffinger 24 und 25 des Greifabschnitts 5 sind parallel zueinander angeordnet und sind insbesondere derart gebogen geformt, dass mindestens ein oder zwei Stellen entlang des Griffingers mit einem Behälter in der Greifstellung zusammenwirken. Insbesondere weisen die zwei Stellen im Vergleich zu den übrigen Stellen des Greiffingers derart mehr Material auf und/oder sind durch weniger Material an den übrigen Stellen derart hervorgehoben, dass sie in der Greifstellung mit dem Behälter zusammenwirken. In einer anderen Ausführungsform sind die Greiffingern 24 und 25 abnehmbar und einzeln austauschbar. Sie können auch gespreizt zueinander angeordnet sein und/oder auch auf einen gemeinsamen Punkt gerichtet sein, zusammenlaufen bzw. an wenigstens ihrer Spitze verbunden sein.

Der Greifarm 2 weist zwischen der Bohrung 10 und dem Greifabschnitt 5 zwei an einer Greifarminnenseite angeordneten Aufnahmebolzen 14 und 15 zum rotierbaren Befestigen jeweils eines - hier nicht dargestellten - Lagerreifens 16 und 17 auf, der mit dem Steuernocken 11 zum Überführen von der Greifstellung in die Öffnungsstellung zusammenwirken kann. Die Aufnahmebolzen 14 und 15 sind auf einem auf der Greifarminnenseite ausgebildetem Steg ausgeformt, dessen Höhe geringer ist als die Höhe zwischen Oberseite 8 und Unterseite 9 des Greifarms 2 und/oder der Steg parallel zur Oberseite 8 und Unterseite 9 ausgebildet ist. Die Höhe von beiden Lagerreifen 14 und 15 und dem Steg ist vorzugsweise gleich der Höhe zwischen Oberseite 8 und Unterseite 9 des Greifarms 2. Die Aufnahmebolzen 14 und 15 liegen insbesondere auf einer gemeinsamen Achse, die parallel zur Schwenkachse 4 der Bohrung 10 angeordnet ist. Der Greifarm 2 weist einen Verzahnungsabschnitt 20 mit zumindest segmentweise koaxial um die Bohrung 10 an der Greifarminnenseite angeordneten Zähnen 21 zum synchronen Schwenken des Greifarms 2 mit einem korrespondierend angeordneten Greifarm in der Vorrichtung aufweist. Die wenigstens ein oder zwei Zähne 21 sind nacheinander um die Schwenkachse 4 angeordnet und weisen eine Evolventenverzahnung auf.

In Figur 2 wird eine zweite erfindungsgemäße Ausführungsform des Greifarms 2 dargestellt, die sich vom Greifarm aus Figur 1 lediglich in der Anzahl der Greiffinger unterscheidet. In Figur 2 weist der Greifarm drei Greiffinger 24, 25 und 26 auf. Die Höhe der Anordnung der drei Greiffinger 24, 25 und 26 ist größer als die Höhe der Anordnung der zwei Greiffinger aus Figur 1. Außerdem ist der Abstand zwischen den Greiffingern 24 und 25 sowie 25 und 26 aus Figur 2 kleiner als der Abstand zwischen den Greiffingern 24 und 25 aus Figur 1. In anderen Ausführungsformen kann der Abstand zwischen den Greiffingern nach unten, insbesondere in Richtung des Behälterbodens hin, abnehmen.

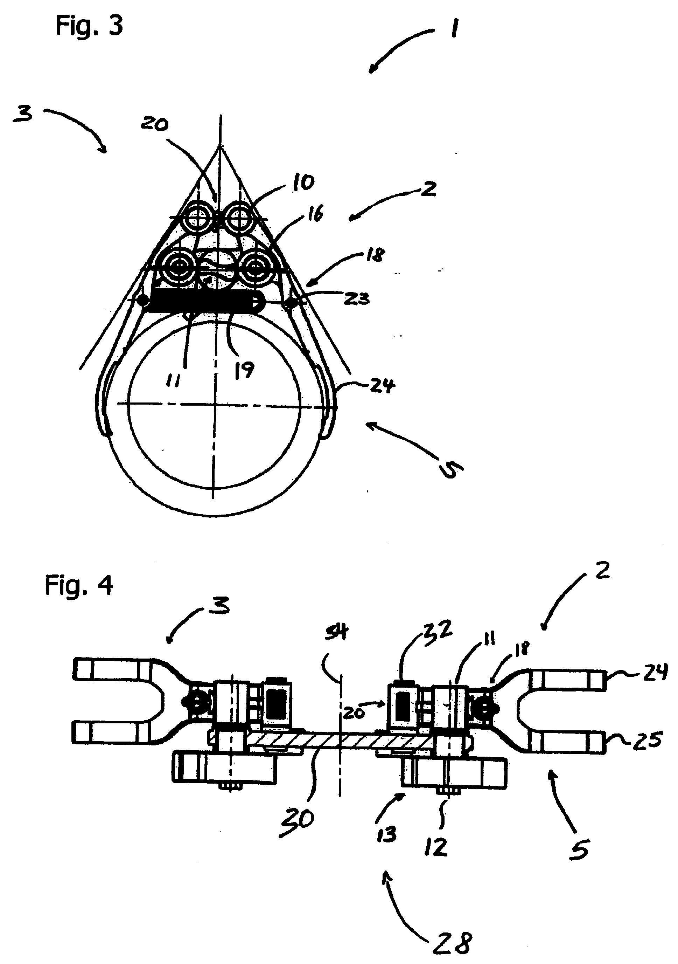

Figur 3 zeigt eine Draufsicht auf eine Greifeinrichtung aus einem ersten Greifarm 2 und einem zweiten korrespondieren Greifarm 3, wobei die Greifarme 2 und 3 einer ersten, zweiten oder einer weiteren erfindungsgemäßen Ausführungsform entsprechen. Der Verzahnungsabschnitt 20 des ersten Greifarms 2 wirkt mit dem Verzahnungsabschnitt des zweiten Greifarms 3 zusammen. Zwischen den Lagerreifen 16 und 17 der jeweiligen Greifarme 2 und 3 ist der Steuernocken 11 angeordnet. Der unten angeordnete Lagerreifen 17 ist durch den oben angeordneten Lagerreifen 16 verdeckt und daher in Figur 3 nicht sichtbar. Der Steuernocken 11 ist momentan in einer Stellung, die den Abstand zwischen den Greifarmen 2 und 3 maximiert und somit die Greifeinrichtung in einer Öffnungsstellung hält. Der Anschaulichkeit halber ist die Feder 19, eine Ausführungsform des Schließelements 6, nur an einem Ende mit einem der Greifarme verbunden. Die Lagerreifen 16 und 17 und die Aufnahme 18 sind derart positioniert und/oder die Feder 19 ist derart ausgebildet, dass die Feder 19 in der Öffnungsstellung und der Greifstellung weder den Steuernocken 11 noch die Lagerreifen 16 und 17 berührt und insbesondere keinen Materialabrieb in der Aufnahme 18 verursacht.

Figur 4 zeigt einen Querschnitt durch eine erste erfindungsgemäße Transportvorrichtung 28, wobei die Schnittebene durch den Mittelpunkt eines Trägerelements 30 führt. Das Trägerelement 30 ist als kreisrunde, ebene Platte ausgebildet. Durch den Mittelpunkt des Trägerelements 30 und senkrecht zur Oberfläche des Trägerelements 30 verläuft die zentrale Drehachse 34, um die sich das Trägerelement 30 dreht. Der Querschnitt verläuft durch die Drehachse 34 und die Steuerachsen 12 der Steuernocken 11. Rechts von der Drehachse 34 ist ein erfindungsgemäßer Greifarm 2 mit seinem Verzahnungsabschnitt 20 und seinem Greifabschnitt 5 sowie der Aufnahme 18 erkennbar. Der Greifarm 2 ist auf einem Lagerbolzen 32 schwenkbar befestigt. Entsprechend sind links von der Drehachse 34 der korrespondierende Greifarm 3 einer weiteren Greifeinrichtung sowie dessen Steuernocken erkennbar. Unterhalb des Trägerelements 30 ist ein an der Steuerachse 12 befestigtes Aktivierungselement 13 angeordnet, dass mit wenigstens eines - hier nicht dargestellten - Bolzens zusammenwirkt, mittels dessen das Aktivierungselement 13 und somit der Steuernocken 11 zum Überführen der Greifeinrichtung in die Greifstellung oder in die Öffnungsstellung gedreht wird. Das Aktivierungselement 13 ist derart geformt, dass es nicht einen ergriffenen Behälter und/oder den Greifarm 2 berührt. In einer anderen Ausführungsform kann das Aktivierungselement derart geformt sein, dass es den Behälter bei der Überführung der Greifeinrichtung 1 in die Öffnungsstellung aus der Greifeinrichtung 1 herausdrückt, um die Übergabe oder die Freigabe des Behälters zu beschleunigen.

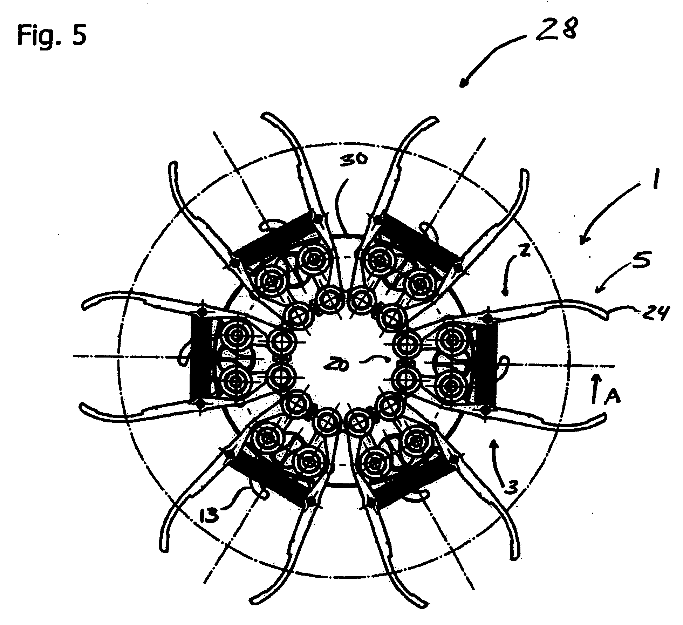

In Figur 5 ist die erste erfindungsgemäße Transportvorrichtung 28 mit sechs Greifeinrichtungen 1 in der Draufsicht dargestellt. Dabei wird der Blick auf den Querschnitt in Figur 4 mittels des Referenzzeichens ,A' identifiziert. Die Symmetrieachsen der vom Mittelpunkt des Trägerelements 30 rechts und links angeordneten Greifeinrichtungen 1 liegen in der Querschnittsebene. Alle gezeigten Greifeinrichtungen 1 haben einen erfindungsgemäßen Greifarm 2 sowie einen korrespondierenden erfindungsgemäßen Greifarm 3, die mit einem dazwischen angeordneten Steuernocken zusammenwirken und mittels eines als Feder ausgeform-Schließmittels in die Greifstellung bewegt werden. Alle Greifeinrichtungen 1 der Transportvorrichtung 28 befinden sich in der Greifstellung. Während ein Greifarm 2 einen Verzahnungsabschnitt mit zwei Zähnen 21 aufweist, sind beim korrespondierenden Greifarm 3 drei Zähne im Verzahnungsabschnitt ausgebildet.

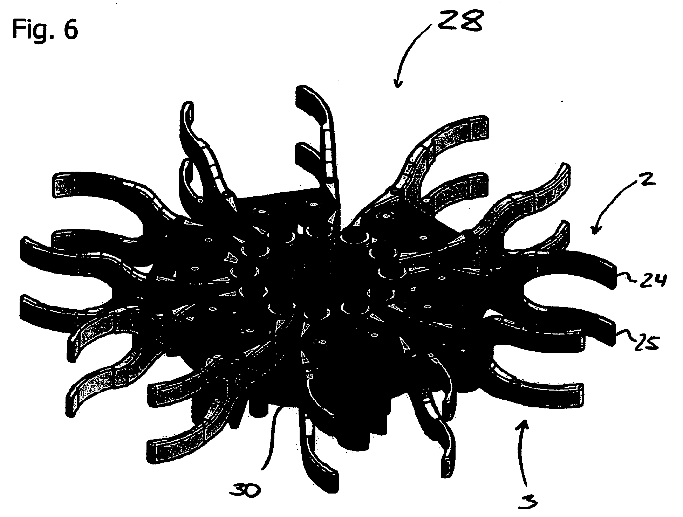

Figur 6 zeigt.eine perspektivische Ansicht auf die erste erfindungsgemäße, in Figur 5 gezeigte Transportvorrichtung 28 mit sechs Greifeinrichtungen 1, die auf dem Trägerelement 30 im gleichen Abstand zueinander, radial und konzentrisch um den Mittelpunkt des Trägerelements 30 angeordnet sind.

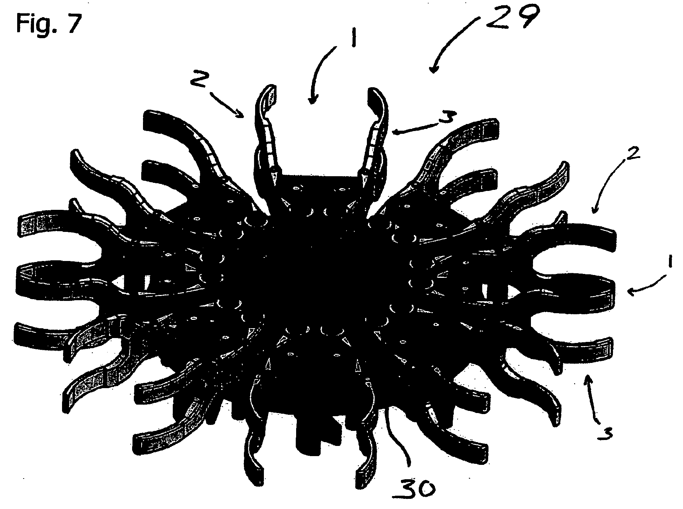

In Figur 7 wird eine zweite erfindühgsgemäße Transportvorrichtung 29 mit acht Greifeinrichtungen 1 aus einem ersten erfindungsgemäßen Greifarm 2 und einem zweiten erfindüngsgemäßen Greifarm 3 dargestellt. Die zweite erfindungsgemäße Transportvorrichtung 29 unterscheidet sich von der ersten Transportvorrichtung 28 lediglich in der Anzahl der Greifeinrichtungen 1. Unter anderem kann das Trägerelement 30 einen größeren Durchmesser haben als das Trägerelement der ersten erfindungsgemäßen Transportvorrichtung 28, um alle acht Greifeinrichtungen 1 auf der zweiten Transportvorrichtung 29 unterzubringen. Eine andere Möglichkeit besteht darin, dass die Trägerelemente 30 den gleichen Durchmesser haben, aber die Greifeinrichtungen 1 der zweiten Transportvorrichtung 29 kleiner dimensioniert sind als die der ersten Transportvorrichtung 28.

### Bezugszeichenliste

- 1: Greifeinrichtung
- 2: Greifarm
- 3: Korrespondierender Greifarm
- 4: Schwenkachse des Greifarms
- 5: Greifabschnitt
- 8: Oberseite des Greifarms
- 9: Unterseite des Greifarms
- 10: Bohrung des Greifarms
- 11: Steuernocken
- 12: Steuerachse
- 13: Aktivierungselement
- 14: Erster Aufnahmebolzen des Greifarms
- 15: Zweiter Aufnahmebolzen des Greifarms
- 16: Erster Lagerreifen
- 17: Zweiter Lagerreifen
- 18: Aufnahme
- 19: Feder
- 20: Verzahnungsabschnitt
- 21: zahn
- 22: Erstes Loch der Aufnahme
- 23: Zweites Loch der Aufnahme
- 24: Erster Greiffinger des Greifarms
- 25: Zweiter Greiffinger des Greifarms
- 26: Dritter Greiffinger des Greifarms
- 28: Erste Transportvorrichtung
- 29: Zweite Transportvorrichtung
- 30: Trägerelement
- 32: Lagerbolzen
- 34: Drehachse des Trägerelements

## Patentansprüche

1. Greifarm (2) für eine Greifeinrichtung (1) zum Greifen, Halten und Führen von flaschenartigen Behältern, wobei die Greifeinrichtung (1) wenigstens einen drehbar gelagerten Steuernocken (11) aufweist, mittels dessen der Greifarm (2) von einer Greifstellung in eine Öffnungsstellung bewegbar ist, wobei der Greifarm (2) wenigstens eine Bohrung (10) zur zumindest teilweisen Aufnahme eines Lagerbolzens (32) aufweist, mittels dessen der Greifarm (2) in der Greifeinrichtung (1) schwenkbar, insbesondere schwenkbar befestigbar ist, wobei der Greifarm (2) wenigstens eine Aufnahme (18) für ein Schließmittel (6) aufweist, mittels dessen der Greifarm (2) von der Öffnungsstellung in die Greifstellung bewegbar ist, und wobei der Greifarm (2) wenigstens einen Greifabschnitt (5) aufweist,
wobei der Greifabschnitt (5) im Wesentlichen gabelartig geformt ist rund mindestens zwei Greiffinger (24, 25) zum Halten eines Behälters aufweist, die derart ausgebildet sind, um jeweils eine Haltekraft in der Greifstellung auf den Bauch des Behälters auszuüben;
**dadurch gekennzeichnet, dass**
der Greifarm (2) zwischen der wenigstens einen Bohrung (10) und dem wenigstens einen Greifabschnitt (5) wenigstens zwei au einer Greifarminnenseite angeordneten Aufnahmebolzen (14; 15) zum rotierbaren Befestigen jeweils wenigstens eines Lagerreifens (16; 17) aufweist, der mit dem wenigstens einen Steuernocken (11) zum Überführen von der Greifstellung in die Öffnungsstellung zusammenwirkt.

2. Greifarm (2) nach Anspruch 1,
**dadurch gekenntzeichnet,** dass
der Greifarm (2) zwischen der wenigstens einen Bohrung (10) und dem wenigstens einen Greifabschnitt (5) für das Schließmittel (6) wenigstens ein erstes Loch (22) als wenigstens eine Aufnahme (18) aufweist, in welches das Schließmittel (6) beim Zusammenbau des Greifarms (2) einsetzbar ist.

3. Greifarm (2) nach Anspruch 1 oder 2,
**dadurch gekennzeichnet, dass**
das Schließmittel (6) wenigstens eine Zugfeder (19) aufweist.

4. Greifarm (2) nach Anspruch 3,
**Dadurch gekennzeichnet, dass**
die wenigstens eine Aufnahme (18) als Federaufnahme ausgebildet ist und wenigstens eine senkrecht zum ersten Loch (22) angeordnetes zweites Loch (23) aufweist, in die ein Riegelelement zum Verriegeln der wenigstens einen Zugfeder in dem wenigstens einen ersten Loch (22) einsetzbar ist.

5. Greifarm (2) nach einem der vorhergehenden Ansprüche,
**dadurch gekennzeichnet, dass**
der Greifarm (2) einstückig aus Kunststoff, insbesondere aus faserverstärktem Polyetheretherketon, gefertigt ist und/oder dass wenigstens zwei Greiffinger (24; 25) des Weinigstens einen Greifabschnitts (5) parallel zueinander angeordnet sind.

6. Greifarm (2) nach einem der vorhergehenden Ansprüche,
**Dadurch gekenntzeichnet,** dass
der Greifarm (2) wenigstens einen Verzahnungsabschnitt (20) mit zumindest segmentweise koaxial um die wenigstens eine Bohrung (10) an der Greifarminnenseite angeordneten Zähnen (21) zum synchronen Schwenken des Greifarms (2) mit einem korrespondierend angeordneten Greifarm in der Vorrichtung aufweist.

7. Greifeinrichtung (1) mit wenigstens einem Greifarm (2) nach einem der Ansprüche 1 bis 6, wobei die Greifeinrichtung (1) eine Greifeinrichtung (1) zum Greifen, Halten und/oder Führen von insbesondere kleinen und rund geformten Behältern ist, wobei die Greifeinrichtung (1) wenigstens einen drehbar gelagerten Steuernocken (11) aufweist, wobei der Steuernocken (11) derart beschaffen und ausgebildet ist, dass mittels des Steuernockens (11) bzw. Drehung des Steuernockens (11) der Greifarm (2) von wenigstens einer ersten Stellung, insbesondere einer Greifstellung, in wenigstens eine zweite Stellung, insbesondere eine Öffnungsstellung, und/oder umgekehrt bewegbar ist.

8. Greifeinrichtung (1) nach Anspruch 7,
**dadurch gekennzeichnet, dass**
die Greifeinrichtung (1) ein Greifarmpaar umfassend wenigstens zwei Greifarme (1), insbesondere wenigstens zwei Greifarme (1) nach einem der Ansprüche 1 bis 7, aufweist, wobei insbesondere wenigstens zwei komplementäre Greifarme ein Greifarmpaar bilden, und/oder dass zwischen den wenigstens zwei Aufnahmen (18) des Greifarmpaars der wenigstens eine Steuernocken (11) angeordnet ist.

9. Transportvorrichtung (28) zum Transportieren von Behältern mit einem oder mehreren Greifarmen (2) nach einem der Ansprüche 1 bis 6 und/oder einem oder mehreren Greifeinrichtungen (1) nach Anspruch 7 oder 8.

10. Transportvorrichtung (28) gemäß Anspruch 9,
**dadurch gekennzeichnet, dass**
die Transportvorrichtung (28) derart ausgebildet ist, dass wenigstens eine weitere Transportvorrichtung (28) aufsteckbar, insbesondere auf die Transportvorrichtung (28) aufsteckbar und/oder formschlüssig verbindbar, ist.

11. Transportvorrichtung (28) nach Anspruch 9 oder 10,
**dadurch gekennzeichnet, dass**
wenigstens eine Steuernocke (11) der Transportvorrichtung mittels wenigstens eines Steckverbindungselements mit wenigstens einer Steuernocke der wenigstens einen weiteren Transportvorrichtung koppelbar, steckbar oder verbindbar ist.

12. Transportvorrichtung (28) nach einem der Ansprüche 9 bis 11,
**dadurch gekenntzeichnet,** dass
die Transportvorrichtung (28) wenigstens einen Lagerbolzen und eine zentrale Drehachse zum Drehen der Transportvorrichtung (28) aufweist, wobei der wenigstens eine Lagerbolzen und/oder die Drehachse zum Wirkverbinden mit der wenigstens einen weiteren Transportvorrichtung ausgebildet ist/sind.

13. Transportsystem mit mehreren Transportvorrichtungen gemäß einer der Ansprüche 9 bis 12,
**dadurch gekenhzeichnet,** dass
die Transportvorrichtungen koaxial zueinander angeordnet sind und/oder die übereinander angeordneten Steuernocken eine gemeinsame Nockenwelle aufweisen.

14. Transportsystem gemäß Anspruch 13,
**Dadurch gekennzeichnet, dass**
die Transportvorrichtungen jeweils wenigstens eine Trägerplatte mit zueinander gleichem und/oder unterschiedlichen Durchmesser/n aufweisen.

## Claims

1. A gripper arm (2) for a gripping device (1) for grasping, holding and guiding bottle-like containers, wherein the gripping device (1) comprises at least one rotatably mounted control cam (11), by means of which the gripper arm (2) can be moved from a gripping position into an open position, wherein the gripper arm (2) has at least one bore hole (10) for at least partially receiving a bearing pin (32) by means of which the gripper arm (2) can be pivoted in the gripping device (1), in particular pivotably mounted, wherein the gripper arm (2) comprises at least one seating (18) for a closing means (6), by means of which the gripper arm (2) can be moved from the open position into the gripping position, and wherein the gripper arm (2) comprises at least one gripping section (5),
wherein the gripping section (5) is substantially of fork-like form and comprises at least two gripper fingers (24, 25) for holding a container which are each configured to exert a retaining force on the body of the container in the gripping position;
**characterized in that**
the gripper arm (2) comprises at least two locating pins (14; 15) arranged on an inner side of the gripper arm between the at least one bore hole (10) and the at least one gripping section (5) for the respective rotatable mounting of at least one seating collar (16; 17) which cooperates with the at least one control cam (11) in the conveying from the gripping position into the open position.

2. The gripper arm (2) according to claim 1,
**characterized in that**
the gripper arm (2) has at least one first hole (22) as at least one seating (18) for the closing means (6) between the at least one bore hole (10) and the at least one gripping section (5) into which the closing means (6) can be inserted during the assembly of the gripper arm.

3. The gripper arm (2) according to claim 1 or 2,
**characterized in that**
the closing means (6) comprises at least one tension spring (19).

4. The gripper arm (2) according to claim 3,
**characterized in that**
the at least one seating (18) is designed as a spring retainer and comprises at least one second hole (23) arranged perpendicular to the first hole (22) into which a locking element for locking the at least one tension spring in the at least one first hole (22) can be inserted.

5. The gripper arm (2) according to any one of the preceding claims,
**characterized in that**
the gripper arm (2) is of one-piece plastic manufacture, particularly from fiber-reinforced polyether ether ketone, and/or that at least two gripper fingers (24; 25) of the at least one gripping section (5) are arranged parallel to one another.

6. The gripper arm (2) according to any one of the preceding claims,
**characterized in that**
the gripper arm (2) comprises at least one toothed section (20) having at least segments of teeth (21) arranged coaxially about the at least one bore hole (10) on the inner side of the gripper arm for synchronously pivoting the gripper arm (2) with a correspondingly disposed gripper arm in the device.

7. A gripping device (1) having at least one gripper arm (2) according to any one of claims 1 to 6, wherein the gripping device (1) is a gripping device (1) for grasping, holding and/or guiding of particularly small and round containers, wherein the gripping device (1) comprises at least one rotatably mounted control cam (11), wherein the control cam (11) is designed and disposed such that the gripper arm (2) can be moved from at least one first position, particularly a gripping position, into at least one second position, particularly an open position, and/or vice versa by means of the control cam (11) or the rotation of the control cam respectively.

8. The gripper device (1) according to claim 7,
**characterized in that**
the gripping device (1) has a pair of gripper arms comprising at least two gripper arms (2), particularly at least two gripper arms (2) according to any one of claims 1 to 7, wherein particularly at least two complementary gripper arms form one gripper arm pair and/or that the at least one control cam (11) is arranged between the at least two seatings (18) of the gripper arm pair.

9. A transport device (28) for transporting containers having one or more gripper arms (2) in accordance with any one of claims 1 to 6 and/or one or more gripping devices (1) according to claim 7 or 8.

10. The transport device (28) according to claim 9,
**characterized in that**
the transport device (28) is designed such that at least one further transport device (28) can be attached, particularly attached and/or positively connected to the transport device (28).

11. The transport device (28) according to claim 9 or 10,
**characterized in that**
at least one control cam (11) of the transport device can be coupled, attached or connected to at least one control cam of the at least one further transport device by means of at least one plug connector element.

12. The transport device (28) according to any one of claims 9 to 11,
**characterized in that**
the transport device (28) comprises at least one bearing pin and one central rotational axis for the rotation of the transport device (28), wherein the at least one bearing pin and/or the rotational axis is/are designed to operatively connect to the at least one further transport device.

13. A transport system having a plurality of transport devices in accordance with any one of claims 9 to 12,
**characterized in that**
the transport devices are arranged coaxially to one another and/or the stacked control cams have a common cam shaft.

14. The transport system according to claim 13,
**characterized in that**
each transport device comprises at least one carrier plate of equal and/or different diameters.

## Revendications

1. Bras de préhension (2) pour un dispositif de préhension (1) destiné à saisir, à maintenir et à guider des récipients semblables à des bouteilles, dans lequel le dispositif de préhension (1) comprend au moins une came de commande (11) montée en rotation, au moyen de laquelle le bras de préhension (2) peut être déplacé depuis une position de préhension jusque dans une position ouverte, dans lequel le bras de préhension (2) comporte au moins un perçage (10) pour recevoir au moins partiellement un goujon de montage (32) au moyen duquel le bras de préhension (2) est capable de pivoter dans le dispositif de préhension (1), et en particulier d'être fixé de manière à être capable de pivoter, dans lequel le bras de préhension (2) comporte au moins un récepteur (18) pour un organe de fermeture (6) au moyen duquel le bras de préhension (2) est déplaçable depuis la position ouverte jusque dans la position de préhension, et dans lequel le bras de préhension (2) comprend au moins une portion de préhension (5),
dans lequel la portion de préhension (5) est formée essentiellement en forme de fourche et comprend au moins deux doigts de préhension (24, 25) pour maintenir un récipient, lesquels sont réalisés de manière à exercer chacun une force de maintien dans la position de préhension sur le corps du récipient ;
**caractérisé en ce que**
le bras de préhension (2) comporte, entre ledit au moins un perçage (10) et ladite au moins une portion de préhension (5), au moins deux goujons de réception (14 ; 15) agencés sur un côté intérieur du bras de préhension et destinés à fixer en rotation respectivement au moins une bague de montage (16 ; 17), qui coopère avec ladite au moins une came de commande (11) pour être transféré de la position de préhension jusque dans la position ouverte.

2. Bras de préhension (2) selon la revendication 1,
**caractérisé en ce que** le bras de préhension (2) comporte, entre ledit au moins un perçage (10) et ladite au moins une portion de préhension (5), au moins un premier trou (22) pour l'organe de fermeture (6), constituant au moins un récepteur (18), trou dans lequel l'organe de fermeture (6) est susceptible d'être mis en place lors de l'assemblage du bras de préhension (2).

3. Bras de préhension (2) selon la revendication 1 ou 2,
**caractérisé en ce que** l'organe de fermeture (6) comprend au moins un ressort de traction (19).

4. Bras de préhension (2) selon la revendication 3,
**caractérisé en ce que** ledit au moins un récepteur (18) est réalisé sous forme de récepteur de ressort et comprend au moins un second trou (23) agencé perpendiculairement au premier trou (22), dans lequel un élément de verrouillage destiné à verrouiller ledit au moins un ressort de traction dans ledit au moins un premier trou (22) peut être mis en place.

5. Bras de préhension (2) selon l'une des revendications précédentes,
**caractérisé en ce que** le bras de préhension (2) est fabriqué d'une seule pièce en matière plastique, en particulier en polyétheréthercétone renforcée par des fibres, et/ou **en ce qu'**au moins deux doigts de préhension (24 ; 25) de ladite au moins une portion de préhension (5) sont agencés parallèlement l'un à l'autre.

6. Bras de préhension (2) selon l'une des revendications précédentes,
**caractérisé en ce que** le bras de préhension (2) comprend au moins un tronçon denté (20) avec des dents (21) agencées au moins à la manière d'un secteur coaxialement autour dudit au moins un perçage (10) sur le côté intérieur du bras de préhension, pour faire pivoter le bras de préhension (2) de manière synchrone avec un bras de préhension agencé en correspondance dans le dispositif.

7. Dispositif de préhension (1) comprenant au moins un bras de préhension (2) selon l'une des revendications 1 à 6, dans lequel le dispositif de préhension (1) est un dispositif de préhension (1) pour saisir, maintenir et/ou guider des récipients, en particulier petits et de forme ronde, dans lequel le dispositif de préhension (1) comprend au moins une came de commande (11) montée en rotation, ladite came de commande (11) étant conçue et réalisée de telle façon qu'au moyen de la came de commande (11), ou respectivement d'une rotation de la came de commande (11), le bras de préhension (2) est déplaçable depuis au moins une première position, en particulier une position de préhension, jusque dans au moins une seconde position, en particulier une position ouverte, et/ou inversement.

8. Dispositif de préhension (1) selon la revendication 7,
**caractérisé en ce que** le dispositif de préhension (1) comprend une paire de bras de préhension incluant au moins deux bras de préhension (1), et en particulier au moins deux bras de préhension (1) selon l'une des revendications 1 à 7, dans lequel en particulier au moins deux bras de préhension complémentaires forment une paire de bras de préhension, et/ou en ce ladite au moins une came de commande (11) est agencée entre lesdits au moins deux récepteurs (18) de la paire de bras de préhension.

9. Dispositif de transport (28) pour le transport de récipients avec un ou plusieurs bras de préhension (2) selon l'une des revendications 1 à 6 et/ou un ou plusieurs dispositifs de préhension (1) selon la revendication 7 ou 8.

10. Dispositif de transport (28) selon la revendication 9,
**caractérisé en ce que** le dispositif de transport (28) est réalisé de telle façon qu'au moins un autre dispositif de transport (28) est susceptible d'être emboîté, en particulier emboîté sur le dispositif de transport (28) et/ou susceptible d'être relié par coopération de formes.

11. Dispositif de transport (28) selon la revendication 9 ou 10,
**caractérisé en ce qu'**au moins une came de commande (11) du dispositif de transport est susceptible d'être accouplée, enfichée ou reliée, au moyen d'au moins un élément de liaison à enfichage, avec au moins une came de commande dudit au moins un autre dispositif de transport.

12. Dispositif de transport (28) selon l'une des revendications 9 à 11,
**caractérisé en ce que** le dispositif de transport (28) comprend au moins un goujon de montage et un axe de rotation central pour la rotation du dispositif de transport (28), dans lequel ledit au moins un goujon de montage et/ou l'axe de rotation est réalisé/sont réalisés en vue d'une liaison active avec ledit au moins un autre dispositif de transport.

13. Système de transport comprenant plusieurs dispositifs de transport selon l'une des revendications 9 à 12,
**caractérisé en ce que** les dispositifs de transport sont agencés coaxialement les uns par rapport aux autres et/ou les cames de commande agencées les unes au-dessus des autres comportent un arbre à cames commun.

14. Dispositif de transport selon la revendication 13,
**caractérisé en ce que** les dispositifs de transport comprennent respectivement au moins une plaque porteuse avec des diamètres mutuellement égaux et/ou différents.
